# DEMANDE DE BREVET EUROPEEN

(11) **EP 4 640 652 A1**
(43) Date de publication de la demande: **29.10.2025**
(21) Numéro de dépôt: 25171671.8
(22) Date de dépôt: 22.04.2025
(51) Int. Cl.: C04B 20/10, C04B 28/02, C04B 18/26, C04B 20/12

(54) **BÉTON DE BOIS ET SON PROCÉDÉ DE FABRICATION**

(30) Priorité: 22.04.2024 FR 2404142
(71) Demandeur: Lesage Developpement S.A.S., 68200 Mulhouse (FR)
(72) Inventeur: STORA, Eric, 68100 MULHOUSE (FR); DE CHEFDEBIEN-ZAGARRIGA, André, 75007 PARIS (FR); BOICHON, Emmanuel, 63110 BEAUMONT (FR)
(74) Mandataire: Ipsilon

(57) **Abrégé**

L'invention concerne un béton comportant un liant (1), et des particules de bois (2) enrobées dans un produit d'enrobage (3) constitué d'argile calcinée , la teneur en volume des particules de bois (2) dans le béton étant supérieure ou égale à 30%. L'invention concerne également un procédé de fabrication d'un béton selon l'invention. Ce procédé est particulier en ce qu'il comporte les étapes suivantes :
- mélange des particules de bois (2) avec le produit d'enrobage (3), afin d'obtenir un enrobage des particules de bois (2) par le produit d'enrobage (3),
- mélange des particules de bois (2) avec au moins un liant (1) et de l'eau.

## Description

### Domaine technique

La présente invention se situe dans le domaine de la construction. Elle concerne plus particulièrement un béton de bois, et son procédé de fabrication. L'invention permet notamment d'obtenir un béton bas carbone peu sensible aux variations des conditions hygrométriques.

### Technique antérieure

Le béton de bois offre aujourd'hui une alternative bas carbone au béton classique. Il s'agit d'un béton dans lequel les granulats sont remplacés par des particules de bois, ce qui résulte en un matériau offrant de hautes performances mécaniques et thermiques tout en étant moins lourd que le béton classique.

Une des problématiques posées par le béton de bois est sa sensibilité aux variations des conditions hygrométriques. En effet, lorsque le bois est en contact avec un air particulièrement humide, il a tendance à absorber de l'humidité, ce qui entraine une augmentation de son volume, ou gonflement. Lorsque l'air redevient sec, le bois restitue cette humidité dans l'air, ce qui entraine une diminution de son volume, ou retrait. Ce phénomène peut générer des fissures dans les éléments de constructions réalisés en béton de bois.

Le document FR2677295 propose de résoudre ce problème en enrobant les particules de bois avec de la fumée de silice. Cette solution n'est pas satisfaisante, la fumée de silice ayant un coût élevé et posant des difficultés d'approvisionnement dues à sa rareté.

### Exposé de l'invention

La présente invention vise à pallier ces inconvénients en proposant un béton comportant un liant et des particules de bois, la teneur en volume des particules de bois dans ledit béton étant supérieure ou égale à 30%. Ce béton est particulier en ce que les particules de bois sont enrobées dans un produit d'enrobage comportant de l'argile calcinée.

Grâce à ces dispositions, le béton selon l'invention a une empreinte carbone diminuée grâce à la présence de bois, tout en présentant une résistance mécanique le rendant compatible avec la construction, et une sensibilité aux variations d'hygrométrie réduite grâce à l'utilisation d'argile calcinée, un matériau peu cher, très disponible, et à faible empreinte carbone.

La masse totale du produit d'enrobage enrobant lesdites particules de bois peut être comprise entre 15 et 60 % de la masse totale des particules de bois, ce qui permet un enrobage efficace des particules de bois et un colmatage efficace de leur microporosité.

Le volume total du produit d'enrobage enrobant lesdites particules de bois peut être supérieur ou égal à 4 % du volume total des particules de bois, ce qui permet un enrobage efficace des particules de bois et un colmatage efficace de leur microporosité.

Ledit béton peut comporter un produit alcalin constitué de silicate de sodium et/ou de carbonate de sodium et/ou d'hydroxyde de sodium, la masse en extrait sec de produit alcalin étant comprise entre 2 et 10% de la masse de particules de bois, ce qui permet de fixer efficacement le produit d'enrobage sur les particules de bois.

Le produit alcalin peut être constitué de silicate de sodium et d'hydroxyde de sodium, la masse en extrait sec du silicate de sodium étant comprise entre 2 et 8 % de la masse de particules de bois, et la masse de l'hydroxyde de sodium étant comprise entre 0,1 et 1,5 % de la masse de particules de bois, ce qui donne des résultats optimaux en termes de fixation du produit d'enrobage sur les particules de bois.

La présente invention concerne également un procédé de fabrication d'un béton selon l'invention, caractérisé en ce qu'il comporte les étapes suivantes :
- mélange des particules de bois avec le produit d'enrobage, afin d'obtenir un enrobage des particules de bois par le produit d'enrobage,
- mélange des particules de bois avec au moins un liant et de l'eau.

Grâce à ces dispositions, le béton selon l'invention peut être obtenu de façon simple et efficace.

Ledit procédé de fabrication peut comporter une étape de séchage des particules de bois jusqu'à un taux d'humidité inférieur à 50 % avant le mélange des particules de bois avec le produit d'enrobage, ce qui permet un enrobage plus efficace des particules de bois par le produit d'enrobage par mélange.

Ledit procédé de fabrication peut comporter une étape de mélange des particules de bois entre elles avant le mélange des particules de bois avec le produit d'enrobage, ce qui permet d'obtenir une masse de particules de bois homogène, et ainsi un enrobage par le produit d'enrobage plus homogène par mélange.

Ledit procédé de fabrication peut comporter les étapes suivantes :
- apport de produit alcalin constitué de silicate de sodium et/ou de carbonate de sodium et/ou d'hydroxyde de sodium sur les particules de bois enrobées de produit d'enrobage, afin de fixer le produit d'enrobage sur la surface des particules de bois,
- séchage des particules de bois enrobées de produit d'enrobage et de produit alcalin, jusqu'à un taux d'humidité inférieur à 50 %.

De cette manière, l'enrobage de produit d'enrobage reste fixé sur la surface des particules de bois, et ne se dilue pas dans les autres éléments entrant dans la composition du béton lorsque les particules de bois y sont mélangées. Le produit d'enrobage peut donc efficacement jouer son rôle de colmatage de la microporosité des particules de bois.

L'étape de fixation peut consister en une aspersion d'une solution de produit alcalin dans un malaxeur dans lequel ont été mélangés les particules de bois séchées et le produit d'enrobage, ce qui est un mode de réalisation simple et efficace de l'invention.

L'étape de fixation peut consister en un trempage des particules de bois enrobées de produit d'enrobage dans une solution de produit alcalin, ce qui permet une distribution efficace du produit alcalin sur toute la surface des particules de bois.

### Brève description des dessins

La présente invention et ses avantages apparaîtront mieux dans la description suivante de plusieurs modes de réalisation donnés à titre d'exemples non limitatifs, en référence aux dessins annexés, dans lesquels :

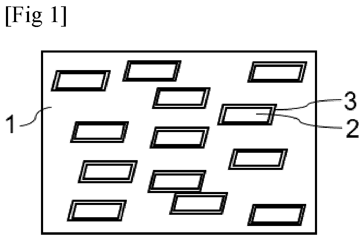

[Fig 1] la fig. 1 est une vue schématique d'un béton selon un mode de réalisation préféré de l'invention.

### Description des modes de réalisation

Le béton selon l'invention, représenté en fig. 1, comporte un liant 1, et des particules de bois 2 enrobées dans un produit d'enrobage 3 comportant de l'argile calcinée.

L'argile calcinée est par exemple du métakaolin, de la pouzzolane calcinée, ou tout autre type. Le produit d'enrobage peut être un mélange de plusieurs types distincts d'argile calcinée.

Le liant est de préférence un liant minéral choisi dans le groupe comportant par exemple le ciment, le ciment Portland, le ciment CEM II, un autre ciment répondant à la norme ciment EN 197-1, le laitier de haut fourneau, le métakaolin, les argiles calcinées ou une combinaison d'au moins deux de ces composants.

Un ou plusieurs fillers peuvent être ajoutés au ciment, tel que des fillers siliceux ou calcaires répondant à la norme NF P18-508.

Du sable peut être ajouté en complément du liant pour former un mortier et améliorer la résistance du béton de bois.

Le métakaolin éventuellement utilisé pour l'enrobage est par exemple un métakaolin flash.

Les particules de bois peuvent être enrobées exclusivement d'argile calcinée, ou d'un mélange d'un ou de ces produits et d'un ou plusieurs autres produits, par exemple un ciment CEM IV. Si le produit d'enrobage 3 n'est pas constitué exclusivement d'argile calcinée, l'argile calcinée peut constituer au moins 50 % en poids du produit d'enrobage 3, et de préférence au moins 70 à 80 %.

Les particules de bois peuvent se présenter par exemple sous forme de copeaux, de plaquettes, de granulés, ou toute autre forme. Les particules de bois peuvent présenter une granulométrie comprise entre 1 mm et 50 mm, de préférence comprise entre 2 mm et 14 mm. Le bois peut être de toute essence, par exemple du pin, de l'épicéa, du sapin, du hêtre, du chêne, du bambou, un mélange d'au moins deux de ces essences, ou autre.

La teneur en volume des particules de bois dans le béton selon l'invention peut être supérieure ou égale à 30 %, de préférence supérieure ou égale à 50 %, par exemple comprise entre 60 et 75 %.

La quantité de produit d'enrobage enrobant les particules de bois, en termes de masse, est par exemple comprise entre 15 et 60 %, de préférence comprise entre 35 et 55 % de la quantité de particules de bois. Ainsi, si la teneur en volume des particules de bois dans le béton est de 70 %, la quantité de produit d'enrobage enrobant les particules de bois est de préférence comprise entre 80 et 125 kg par m³.

La quantité de produit d'enrobage enrobant les particules de bois, en termes de volume, est par exemple supérieure à 4 %, de préférence comprise entre 6 et 10 % de la quantité de particules de bois.

Dans un mode de réalisation préféré, le béton comporte un produit alcalin constitué de silicate de sodium et/ou de carbonate de sodium et/ou d'hydroxyde de sodium, dont la fonction est de fixer le produit d'enrobage sur les particules de bois, et de l'empêcher de se mélanger aux autres constituants du béton de bois, par exemple au liant, lors de leur mélange avec les particules de bois. La masse en extrait sec de produit alcalin est par exemple comprise entre 2 et 10 %, de préférence comprise entre 3 et 5 % de la masse des particules de bois. Dans le produit alcalin, la masse en extrait sec de silicate de sodium est par exemple comprise entre 2 et 8 %, de préférence comprise entre 3 et 5 % de la masse des particules de bois. Un ajout d'hydroxyde de sodium de 0,1 à 1,5 % en masse d'extrait sec, de préférence entre 0,3 et 1,5 %, idéalement entre 1 et 1,5 %, est possible pour permettre d'avoir une solution d'activation optimale en abaissant le rapport molaire SiO₂/Na₂O et favoriser la réaction de géopolymérisation. Ce mélange permet de former avec le produit d'enrobage un géopolymère à base d'aluminosilicates, la réaction de géopolymérisation étant activée par l'apport supplémentaire d'ions alcalins Na+ issus de l'hydroxyde de sodium. La présence du géopolymère permet d'augmenter la résistance en compression, et de diminuer l'absorption d'eau, des particules de bois enrobées.

Le carbonate de sodium peut être un substitut intéressant du silicate de sodium, car il est plus disponible et moins cher.

Dans le béton selon l'invention, les particules particulièrement fines d'argile calcinée viennent colmater les micropores des particules de bois. Ceci permet non seulement de réduire la variation dimensionnelle de ces particules avec les variations d'hygrométrie, mais également d'en augmenter la résistance mécanique et la durabilité.

Le béton selon l'invention peut être fabriqué selon un procédé comportant les étapes suivantes :
- de préférence, séchage des particules de bois, afin d'obtenir un taux d'humidité inférieur à 50 %, de préférence inférieur à 30%. Ce taux d'humidité peut être mesuré en séchant complètement en étuve les particules de bois et en calculant la différence de masse entre la masse actuelle des particules et la masse des particules entièrement sèches divisée par cette masse sèche. Cette étape de séchage peut être réalisée à l'air libre, dans une cuve de séchage, dans un lit fluidisé, ou par tout autre moyen,
- de préférence, mélange des particules de bois entre elles, par exemple dans un malaxeur, afin d'obtenir une masse homogène de particules de bois, pendant une durée par exemple comprise entre 30 et 90 secondes, de préférence entre 50 et 70 secondes,
- mélange des particules de bois avec le produit d'enrobage, par exemple dans un malaxeur qui peut être identique au malaxeur utilisé à l'étape précédente, afin d'obtenir un enrobage des particules de bois par le produit d'enrobage, pendant une durée par exemple comprise entre 30 et 120 secondes, de préférence entre 50 et 90 secondes. Une partie du liant, par exemple de 0 à 30 % du poids total du liant, peut être incorporée lors de cette étape de mélange, éventuellement dès le début. De préférence, dans ce mélange, au moins 70% de la masse est constituée de bois et de produit d'enrobage,
- mélange des particules de bois avec au moins un liant et de l'eau, et le cas échéant avec les autres éléments entrant dans la composition du béton tel qu'un ou plusieurs fillers, et des charges telles que du sable.

Il est à noter qu'une partie du liant peut être mélangée avec les particules de bois dès l'étape de mélange des particules de bois avec le produit d'enrobage, On obtient alors une étape de mélange des particules de bois avec le produit d'enrobage et avec une partie du liant, par exemple de 10 à 30 % en poids de la quantité totale de liant.

A l'issue de cette dernière étape, la composition obtenue peut être coulée dans un banc de moulage, puis mise sous pression mécanique, à un niveau de pression compris par exemple entre 80 et 150 kN/m², afin d'obtenir un panneau de construction préfabriqué.

Dans un mode réalisation préféré de l'invention, le procédé comporte en outre les étapes suivantes, après enrobage des particules de bois avec le produit d'enrobage, et avant le mélange de ces particules avec le liant et l'eau :
- fixation du produit d'enrobage enrobant les particules de bois sur la surface des particules de bois. Cette fixation est de préférence obtenue en utilisant un produit alcalin constitué de silicate de sodium et/ou de carbonate de sodium et/ou d'hydroxyde de sodium. Une solution de produit alcalin peut être vaporisé sur les particules de bois, par exemple directement dans le malaxeur utilisé pour l'enrobage, ou sur un convoyeur transportant les particules de bois après qu'elles aient été enrobées. Alternativement, les particules de bois enrobées de produit d'enrobage peuvent être trempées dans une solution de produit alcalin, ce qui présente l'avantage d'une répartition plus homogène du produit alcalin sur les particules, ou les particules de bois peuvent être pré-humidifiées par aspersion avec une solution de produit alcalin avant d'être mélangé avec le produit d'enrobage,
- séchage des particules de bois enrobées de produit d'enrobage et de produit alcalin, jusqu'à un taux d'humidité inférieur à 50%, de préférence 30%. Cette étape de séchage peut être réalisée à l'air libre, dans une cuve de séchage, dans un lit fluidisé, ou par tout autre moyen.

Voici un exemple de composition d'un béton selon l'invention, pour 1 m³ de béton compacté :
- liant (mélange de ciment, laitier de haut-fourneau, filler calcaire, le ciment représentant au moins 40% de la masse totale) : 270 à 310 kg,
- sable, granulométrie comprise entre 0 et 4 mm : 342 kg,
- particules de bois traitées, granulométrie comprise entre 4 et 8 mm : 670 à 710 litres,
- eau : 210 à 250 kg.

Dans cette composition, les particules de bois traitées peuvent être constituées des éléments suivants, selon les teneurs en masse respectives (premier exemple de pré-traitement) :
- bois : entre 65 et 68 %,
- métakaolin : entre 30 et 32 %,
- silicate de sodium : entre 2 et 3 % en extrait sec,
- éventuellement, une quantité d'eau, pour avoir une humidité suffisante pour que le produit d'enrobage s'accroche aux particules de bois.

Alternativement, les particules de bois traitées peuvent être constituées des éléments suivants, selon les teneurs en masse respectives (deuxième exemple de pré-traitement) :
- bois : entre 68 et 70 %,
- métakaolin : entre 25 et 27 %,
- silicate de sodium : 4,5 % en extrait sec,
- hydroxyde de sodium : 0,5 % en extrait sec,
- éventuellement, une quantité d'eau, pour avoir une humidité suffisante pour que le produit d'enrobage s'accroche aux particules de bois.

Les deux bétons dont la composition est reprise ci-dessus, avec deux pré-traitements différents, ont été testés selon la norme NF EN 772-14, afin d'examiner leur sensibilité à l'humidité en termes de variations dimensionnelles. Les performances ont été comparées à un béton témoin dont la composition était identique, mais dans lequel les particules de bois n'étaient pas enrobées dans le produit d'enrobage. Les tests ont montré que les variations dimensionnelles des deux bétons selon l'invention sont deux fois moins importantes que les variations dimensionnelles du béton témoin sans prétraitement.

L'absorption d'eau à 60 minutes des particules de bois pré-traitées selon les deux exemples ci-dessus a été mesurée selon la méthode RILEM TC 236-BBM. Dans les deux cas, l'absorption d'eau des particules de bois pré-traitées est nettement diminuée par rapport à l'absorption d'eau du granulat de bois brut, qui est 94 %. Pour le premier pré-traitement, l'absorption d'eau mesurée à 60 minutes est de 67 à 81 %, suivant le type de granulat de bois utilisé. Pour le second pré-traitement, l'absorption d'eau mesurée à 60 minutes est de 63 %, soit une diminution de 33 % par rapport au granulat de bois brut.

Des essais de résistance mécanique à la compression selon la norme NF EN 12390- 3 ont également été réalisés pour les deux bétons selon l'invention décrits ci-dessus. La résistance moyenne mesurée est de 4,8 méga Pascal à 28 jours pour le premier pré-traitement, et de 5,5 méga Pascal à 28 jours pour le deuxième pré-traitement.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Béton comportant un liant (1), et des particules de bois (2), la teneur en volume des particules de bois (2) dans ledit béton étant supérieure ou égale à 30 %, **caractérisé en ce que** les particules de bois (2) sont enrobées dans un produit d'enrobage (3) comportant de l'argile calcinée.

2. Béton selon la revendication 1, dans lequel la masse totale du produit d'enrobage (3) enrobant lesdites particules de bois (2) est comprise entre 15 et 60 % de la masse totale des particules de bois (2).

3. Béton selon l'une des revendication 1 à 2, dans lequel le volume total du produit d'enrobage (3) enrobant lesdites particules de bois (2) est supérieur ou égal à 4 % du volume total des particules de bois (2).

4. Béton selon l'une des revendications 1 à 3, comportant un produit alcalin constitué de silicate de sodium et/ou de carbonate de sodium et/ou d'hydroxyde de sodium, la masse en extrait sec dudit produit alcalin est comprise entre 2 et 10% de la masse de particules de bois (2).

5. Béton selon la revendication 4, dans lequel le produit alcalin est constitué de silicate de sodium et d'hydroxyde de sodium, la masse en extrait sec du silicate de sodium étant comprise entre 2 et 8 % de la masse de particules de bois (2), et la masse en extrait sec de l'hydroxyde de sodium est comprise entre 0,1 et 1,5 % de la masse de particules de bois (2)

6. Procédé de fabrication d'un béton selon l'une des revendications 1 à 5 **caractérisé en ce qu'**il comporte les étapes suivantes :
- mélange des particules de bois (2) avec le produit d'enrobage (3), afin d'obtenir un enrobage des particules de bois (2) par le produit d'enrobage (3),
- mélange des particules de bois (2) avec au moins un liant (1) et de l'eau.

7. Procédé de fabrication selon la revendication 6, **caractérisé en ce qu'**il comporte une étape de séchage des particules de bois (2) jusqu'à un taux d'humidité inférieur à 50% avant le mélange des particules de bois (2) avec le produit d'enrobage (3).

8. Procédé de fabrication selon l'une des revendications 6 à 7, **caractérisé en ce qu'**il comporte une étape de mélange des particules de bois (2) entre elles avant le mélange des particules de bois avec le produit d'enrobage (3).

9. Procédé de fabrication selon l'une des revendications 6 à 8, **caractérisé en ce qu'**il comporte les étapes suivantes :
- apport d'un produit alcalin constitué de silicate de sodium et/ou de carbonate de sodium et/ou d'hydroxyde de sodium sur les particules de bois (2) enrobées de produit d'enrobage (3), afin de fixer le produit d'enrobage (3) sur la surface des particules de bois (2),
- séchage des particules de bois (2) enrobées de produit d'enrobage (3) et dudit produit alcalin, jusqu'à un taux d'humidité inférieur à 50 %.

10. Procédé de fabrication selon la revendication 9, **caractérisé en ce que** l'étape de fixation consiste en une aspersion d'une solution dudit produit alcalin dans un malaxeur dans lequel ont été mélangés les particules de bois (2) séchées et le produit d'enrobage (3).

11. Procédé de fabrication selon la revendication 9, **caractérisé en ce que** l'étape de fixation consiste en un trempage des particules de bois (2) enrobées de produit d'enrobage (3) dans une solution dudit produit alcalin.
